# EUROPÄISCHE PATENTANMELDUNG

(11) **EP 3 546 049 A1**
(43) Veröffentlichungstag der Anmeldung: **02.10.2019**
(21) Anmeldenummer: 18165071.4
(22) Anmeldetag: 29.03.2018
(51) Int. Cl.: B01D 46/24, B01D 39/20, B01D 29/11, B22C 9/08, C04B 38/00, C22B 9/02, C22B 21/06, B33Y 10/00

(54) **GIESSFILTER**

(71) Anmelder: Exentis Knowledge GmbH, 5608 Stetten AG (CH)
(72) Erfinder: VASIC, Srdan, 8810 Horgen (CH)
(74) Vertreter: Manitz Finsterwald Patent- und Rechtsanwaltspartnerschaft mbB

(57) **Zusammenfassung**

Gießfilter, insbesondere für das Filtrieren und/oder Reinigen einer Metallschmelze, mit einer zumindest abschnittsweise aus einem keramischen Werkstoff hergestellten Zellenstruktur zur Durchleitung einer Metallschmelze, wobei die Zellenstruktur durch eine Mehrzahl von Zellen gebildet ist, die durch Zellenwände zueinander begrenzt sind, wobei zumindest eine der Zellenwände eine Wandstärke von weniger als 1 mm aufweist und wobei zumindest eine der Zellen eine hexagonale Querschnittsform aufweist.

## Beschreibung

Die vorliegende Erfindung betrifft einen Gießfilter, insbesondere für das Filtrieren und/oder Reinigen einer Metallschmelze. Die Erfindung betrifft ebenso die Verwendung eines Gießfilters, ein Verfahren zur Herstellung von Metallkomponenten sowie ein Verfahren zur Herstellung eines Gießfilters.

Es ist bekannt, beim Gießen von Metallschmelzen sogenannte Gießfilter einzusetzen. Derartige Gießfilter können in das Anschnittsystem einer Gießform eingesetzt werden und dienen zum Zurückhalten von exogenen und/oder endogenen Einschlüssen wie Schlacke, Schaum oder oxidischer Verunreinigungen aus der Gießströmung. Solche Gießfilter können beispielsweise aus einem Metallgewebe oder auch aus einer keramischen Struktur bestehen. Dabei können keramische Filter als Rundlochfilter, Schaumkeramikfilter oder Zellfilter ausgebildet sein.

Rundlochfilter werden durch ein Pressverfahren hergestellt und weisen üblicherweise eine hohe Stabilität auf. Aufgrund der großen Wanddicken innerhalb der Struktur des Rundlochfilters entsteht jedoch während des Gießvorgangs ein hoher Strömungswiderstand. Schaumkeramikfilter gewährleisten eine nur mäßige Reproduzierbarkeit, aufgrund von Abweichungen der Porengrößen. Dies kann zu unterschiedlichen Strömungswiderständen und damit zu Schwankungen der Gießzeiten führen. Die Gießqualität kann dadurch beeinträchtigt werden.

Zellfilter werden üblicherweise durch Extrudieren hergestellt und können Zellwände mit verhältnismäßig geringer Wandstärke aufweisen. Hierdurch kann ein großer freier Querschnitt erzeugt werden, was sich günstig im Hinblick auf einen geringen Strömungswiderstand auswirkt. Extrudierte Zellfilter weisen jedoch eine nur geringe mechanische Stabilität auf, was beim Gießen etwa zu einem Bruch des Filters führen kann.

Vor dem oben dargelegten Hintergrund bestand die Aufgabe der vorliegenden Erfindung darin, einen Gießfilter anzugeben, der bei hoher Reproduzierbarkeit und verhältnismäßig geringem Strömungswiderstand gleichzeitig eine hohe Sicherheit während des Gießens gewährleistet. Ebenso bestand die Aufgabe darin, die Verwendung eines Gießfilters, ein Verfahren zur Herstellung von Metallkomponenten sowie ein Verfahren zur Herstellung eines Gießfilters anzugeben.

In Bezug auf den Gießfilter ist diese Aufgabe erfindungsgemäß durch den Gegenstand des Anspruchs 1 gelöst worden. Die Verwendung eines Gießfilters ist in Anspruch 14, ein Verfahren zur Herstellung von Metallkomponenten in Anspruch 15 und ein Verfahren zur Herstellung eines Gießfilters in Anspruch 16 angegeben. Vorteilhafte Ausgestaltungen sind Gegenstand der abhängigen Ansprüche und werden nachfolgend im Einzelnen erörtert.

Ein erfindungsgemäßer Gießfilter ist insbesondere für das Filtrieren und/oder Reinigen einer Metallschmelze geeignet. Ein erfindungsgemäßer Filter kann dabei für den Einsatz in Niederdruckgussverfahren oder aber auch für den Einsatz in Hochdruckgussverfahren ausgebildet sein. Insbesondere ist ein erfindungsgemäßer Gießfilter für das Filtrieren und/oder Reinigen einer Aluminiumschmelze geeignet, besonders bevorzugt für das Gießen von Aluminiumteilen. Hierzu zählen beispielsweise Aluminiumfelgen für Automobile.

Ein erfindungsgemäßer Gießfilter weist eine zumindest abschnittsweise aus einem keramischen Werkstoff hergestellte Zellenstruktur zur Durchleitung einer Metallschmelze auf. Die Zellenstruktur kann durch eine Mehrzahl von Zellen gebildet sein, die durch Zellenwände zueinander begrenzt sind, wobei zumindest eine der Zellenwände eine Wandstärke von weniger als 1 mm aufweist. Erfindungsgemäß ist ferner vorgesehen, dass zumindest eine der Zellen eine hexagonale Querschnittsform aufweist.

Durch die geringe Wandstärke von weniger als 1 mm wird der freie Querschnitt der Zellenstruktur vergrößert, wodurch der Strömungswiderstand reduziert werden kann. Gleichzeitig wird durch die hexagonale Querschnittsform ein hohes Maß an Stabilität der Zellenstruktur und damit des gesamten Gießfilters sichergestellt. Eine hexagonale Querschnittsform ermöglicht zudem die Ausbildung von Zellenwänden, die entlang des Umfangs einer Zelle eine im Wesentlichen gleichbleibende Wandstärke aufweisen. Neben der verhältnismäßig geringen Wandstärke von weniger als 1 mm kann durch die hexagonale Querschnittsform folglich eine insgesamt kleine Stirnfläche der Zellenstruktur realisiert werden, beispielsweise im Vergleich zu Rundlochfiltern. Dies wirkt sich günstig auf die Verringerung des Strömungswiderstandes aus.

Durch die hexagonale Querschnittsform wird demzufolge gewährleistet, dass auch bei geringen Wandstärken der jeweiligen Zellenwände und gleichzeitig eines nur geringen Strömungswiderstandes während des Gießens einer Metallschmelze die Gefahr eines unerwünschten Bruchs des gesamten Gießfilters beziehungsweise der Zellenstruktur verringert wird.

Ein erfindungsgemäßer Gießfilter gewährleistet somit einen nur geringen Strömungswiderstand, bei hoher Reproduzierbarkeit und verringerter Gefahr von Materialversagen während eines Gießvorgangs.

Bei einer hexagonalen Querschnittsform kann es sich in vorteilhafter Weise um eine gleichseitige hexagonale Querschnittsform handeln. Ebenso kann es sich um eine hexagonale Querschnittsform mit unterschiedlichen Seitenlängen handeln.

Gemäß einer bevorzugten Ausgestaltung weist zumindest eine der Zellen eine quer zu einer Strömungsorientierung verlaufende hexagonale Querschnittsform auf und/oder zumindest eine der Zellen weist einen entlang einer Strömungsorientierung gleichbleibenden Querschnitt auf. Die hexagonale Querschnittsform der jeweiligen Zelle kann demnach quer zur Strömungsorientierung der jeweiligen Zelle beziehungsweise Zellenstruktur verlaufen und gleichzeitig kann diese hexagonale Querschnittsform entlang der Strömungsorientierung gleichbleibend sein. Die Querschnittsformen am Strömungseinlass und der Strömungsauslass der jeweiligen Zelle können folglich identisch ausgebildet sein, sodass sowohl am Strömungseinlass als auch am gegenüberliegenden Strömungsauslass eine jeweils identische Querschnittsform vorliegt.

Eine solche Formgebung der Zelle weist sich günstig im Hinblick auf die Stabilität der Zellstruktur aus. Gleichzeitig wird durch eine entlang der Strömungsorientierung gleichbleibende hexagonale Formgebung einer Zelle eine verhältnismäßig große freie Querschnittsfläche bereitgestellt, so dass der Strömungswiderstand gering gehalten werden kann. Zudem begünstigt die gleichbleibende Querschnittsform entlang der Strömungsorientierung eine Vergleichmäßigung der Metallströmung. Insbesondere kann hierdurch mit erhöhter Sicherheit eine turbulente Strömung in eine laminare Strömung umgewandelt werden, was sich günstig auf den Einströmprozess in die jeweilige Gießform auswirken kann.

Gemäß einer weiter bevorzugten Ausgestaltung weisen zwei oder mehr Zellen, bevorzugt mehr als 50 % der Zellen, insbesondere mehr als 75 % der Zellen, eine gleiche Formgebung auf. Beispielsweise können mehrere benachbarte Zellen eine zueinander identische Formgebung aufweisen. Dies kann sich günstig auf das Strömungsverhalten auswirken, insbesondere im Hinblick auf eine Vergleichmäßigung der Strömung entlang der gesamten Zellenstruktur.

Ferner kann die Zellenstruktur durch Randzellen begrenzt sein, wobei die Formgebung zumindest einer der Randzellen von der Formgebung einer innenliegenden Zelle abweicht. Es besteht demnach die Möglichkeit, sämtliche innenliegenden Zellen oder eine Vielzahl der innenliegenden Zellen identisch zueinander auszubilden, wohingegen zumindest einige der Randzellen eine abweichende Formgebung aufweisen. Es besteht hierdurch insbesondere die Möglichkeit, die Außenumfangsform des Gießfilters unabhängig von der Form der Randzellen auszugestalten.

Gemäß einer bevorzugten Ausgestaltung weist zumindest eine der Zellenwände eine Wandstärke von weniger als 0,75 mm, bevorzugt weniger als 0,5 mm, weiter bevorzugt von weniger als 0,4 mm, noch weiter bevorzugt von weniger als 0,35 mm und/oder mehr als 0,2 mm, bevorzugt mehr als 0,25 mm auf. Durch eine derartige Wandstärke kann der Strömungswiderstand während eines Gießprozesses weiter verringert und gleichzeitig eine ausreichende Stabilität der Zellenstruktur gewährleistet werden. Insbesondere weist zumindest eine der Zellenwände eine Wandstärke von etwa 0,3 mm auf.

In bevorzugter Weise weist eine Vielzahl der Zellenwände eine voranstehend erwähnte Wandstärke auf. Besonders bevorzugt können sämtliche Zellenwände, mit Ausnahme der Stützwände beziehungsweise der Zellenwände am Rand der Zellenstruktur, mit einer voranstehend angegebenen Wandstärke ausgebildet sein.

Gemäß einer weiteren Ausgestaltung weist die Zellenstruktur und/oder zumindest eine der Zellen und/oder Zellenwände eine sich in Strömungsorientierung erstreckende Höhe von weniger als 6 mm, insbesondere von weniger als 5 mm, und/oder von mehr als 3 mm, bevorzugt von mehr als 4 mm auf. Insbesondere weist die Zellenstruktur und/oder zumindest eine der Zellen und/oder Zellenwände eine sich in Strömungsorientierung erstreckende Höhe von etwa 4,2 mm auf.

Durch eine verhältnismäßig große Höhe der Zellenstruktur beziehungsweise der Zellenwände in Strömungsorientierung ergeben sich auch längere Strömungskanäle, die insbesondere durch die jeweiligen Zellen der Zellenstruktur gebildet werden. Zwar verbessern längere Strömungskanäle die Filterwirkung. Zudem wirkt sich eine größere Höhe der Zellenstruktur beziehungsweise der Zellenwände in Strömungsorientierung günstig auf das mechanische Verhalten aus. Aus diesem Grund werden Zellenstrukturen häufig mit einer größeren Höhe ausgebildet als für die jeweilige Filterwirkung tatsächlich erforderlich ist. Hierdurch kann sich folglich auch der Strömungswiderstand in erwünschten Maß erhöhen.

Aufgrund der erfindungsgemäß vorgesehenen hexagonalen Querschnittsform sind jedoch eine übermäßige Höhe der Zellenstruktur und damit die Ausbildung besonders langer Kanäle nicht mehr erforderlich. Vielmehr kann durch die Ausgestaltung der Zellenstruktur eine günstige Filterwirkung bei gleichzeitig ausreichender mechanischer Stabilität gewährleistet werden.

Gemäß einer weiter vorteilhaften Ausgestaltung kann der Gießfilter eine Stützstruktur zur Verstärkung der Zellenstruktur aufweisen. Hierzu kann die Stützstruktur mit der Zellenstruktur verbunden und/oder einstückig mit dieser ausgebildet sein. Die Stützstruktur ist bevorzugt durch zumindest eine Stützwand gebildet, die zumindest abschnittsweise zwischen benachbarten Zellen verläuft und/oder deren Wandstärke zumindest abschnittsweise größer ist als die Wandstärke einer Zellenwand und/oder deren Wandhöhe zumindest abschnittsweise größer ist als die Wandhöhe einer Zellenwand.

Durch eine solche Stützstruktur kann sichergestellt werden, dass eine insgesamt ausreichende Stabilität erreicht beziehungsweise die bereits durch die hexagonale Querschnittsform der zumindest einen Zelle erreichte Stabilität weiter verbessert wird. Durch die Stützstruktur wird insbesondere gewährleistet, dass trotz der geringen Wandstärke der jeweiligen Zellenwand und/oder der begrenzten Höhe der Zellenstruktur die Gefahr eines unerwünschten Bruchs des gesamten Gießfilters beziehungsweise der Zellenstruktur verringert wird.

Gemäß einer weiter bevorzugten Ausgestaltung weist die Stützstruktur eine Mehrzahl an Stützwänden auf, die bevorzugt unter einem Winkel zueinander und/oder von einem Randbereich der Zellenstruktur und einen Innenbereich der Zellenstruktur verlaufen. Dabei können die Stützwände insbesondere in einem Innenbereich der Zellenstruktur aufeinander zu laufen beziehungsweise auch ineinander übergehen. Eine solche Ausgestaltung kann zu einer weiteren Verbesserung der mechanischen Eigenschaften führen.

Dabei kann die Stützstruktur die Zellenstruktur insbesondere in eine Mehrzahl von Zellenstrukturabschnitten unterteilen. Derartige Zellenstrukturabschnitte können beispielsweise kuchenförmig ausgebildet sein. Beispielsweise können drei oder mehr kuchenförmig geteilte Zellenstrukturabschnitte vorgesehen sein, die zueinander jeweils durch eine Stützwand begrenzt sind. Bei hoher mechanischer Stabilität kann auf diese Weise eine besonders gleichmäßige Strömung einer Metallschmelze durch die Zellenstruktur gewährleistet werden.

Gemäß einer weiter bevorzugten Ausgestaltung kann die Stützwand zueinander gewinkelt verlaufende Wandabschnitte aufweisen. Durch eine derartige Ausgestaltung kann die Stützwand in vorteilhafter Weise der Formgebung benachbarter Zellen folgen. Beispielweise können die Zellen jeweils eine hexagonale Querschnittsform aufweisen, wobei die Stützwand einer solchen hexagonalen Querschnittsform der jeweils angrenzenden Zellen folgen beziehungsweise die jeweilige hexagonale Querschnittsform der angrenzenden Zellen abschnittsweise definieren kann. Auf diese Weise werden eine hohe mechanische Stabilität und gleichzeitig ein hohes Maß an Einheitlichkeit der Zellen der Zellenstruktur sichergestellt.

Gemäß einer weiteren Ausgestaltung kann die Stützwand einen Wandabschnitt aufweisen, der gegenüber der Zellenstruktur, insbesondere aus einer Abschlussebene der Zellenstruktur, vorsteht und/oder in Strömungsorientierung gegenüber zumindest einer Zellen und/oder Zellenwände vorsteht. Ein in Strömungsorientierung vorstehender Wandabschnitt kann insbesondere in oder entgegegn einer Strömungsrichtung vorstehen. Ein solcher Wandabschnitt kann beispielsweise um mehr als 1 mm vorstehen, insbesondere um etwa 1,3 mm. Durch ein derartiges Vorstehen der Stützwand beziehungsweise durch eine Ausbildung der Stützwand mit einem vorstehenden Wandabschnitt kann die Stabilität beziehungsweise der Einfluss der Stützstruktur auf die Stabilität der Zellenstruktur weiter verbessert werden. Durch das Vorstehen in oder entgegen einer Strömungsrichtung wird insbesondere eine verbesserte Stützfunktionalität für die Zellenstruktur bereitgestellt, die einen in Strömungsrichtung erfolgenden Bruch der Zellenstruktur vermeiden kann.

Es kann weiterhin von Vorteil sein, wenn die Stützwand als Zellenwand ausgebildet ist, deren Wandstärke zumindest abschnittsweise größer ist als die Wandstärke zumindest einer anderen Zellenwand und/oder deren Wandhöhe zumindest abschnittsweise größer ist als die Wandhöhe zumindest einer anderen Zellenwand. Durch Ausgestaltung als Zellenwand kann die Stützwand sowohl zwei benachbarte Zellen voneinander trennen als auch abschnittsweise eine Zelle definieren. Die jeweilige Stützwand kann auf diese Weise eine Mehrzahl an Funktionen erfüllen, nämlich die Ausbildung beziehungsweise das Definieren einer Zelle und damit eines Strömungskanals für eine Metallschmelze und gleichzeitig die Verstärkung der gesamten Zellenstruktur. Die Verstärkung der Zellenstruktur erfolgt dabei insbesondere durch das Abstützen von Zellenwänden mit einer geringeren Wandstärke.

Gemäß einer weiter bevorzugten Ausgestaltung weist die zumindest eine Stützwand eine Wandstärke von weniger als 0,8 mm, bevorzugt von weniger als 0,7 mm und/oder mehr als 0,5 mm, bevorzugt mehr als 0,6 mm auf. Bei einer solchen Wandstärke wird zum einen eine ausreichende Stützwirkung für die Zellenstruktur gewährleistet werden. Gleichzeitig entsteht durch eine solche Wandstärke und damit verbundener Stirnfläche eine akzeptable Erhöhung des Strömungswiderstands für eine Metallschmelze im Einsatz des Gießfilters. Insbesondere weist die zumindest eine Stützwand eine Wandstärke von etwa 0,625 mm auf.

In weiter bevorzugter Weise kann die Zellenstruktur zumindest abschnittsweise durch eine Rahmenstruktur eingefasst sein, durch die insbesondere ein Durchströmbereich für eine Metallschmelze begrenzt wird. Durch eine derartige Rahmenstruktur wird eine zusätzliche Verstärkung der Zellenstruktur und auch der Stützstruktur erreicht, so dass die Gesamtstabilität weiter verbessert werden kann. Zusätzlich kann über eine Rahmenstruktur eine handhabungsfreundliche und sichere Positionierung des Gießfilters innerhalb eines Anschnittsystems einer Gießform bewerkstelligt werden.

Die Rahmenstruktur kann bevorzugt eine kreisrunde oder auch eine vieleckige Form aufweisen. Dabei kann insbesondere die Außenumfangsform und/oder die Innenumfangsform der Rahmenstruktur kreisrund oder vieleckig ausgebildet sein. Auf diese Weise kann der Gießfilter in vorteilhafter Weise an die jeweiligen Einsatzbedingungen angepasst werden. Entsprechend der Rahmenstruktur kann ferner die Zellenstruktur eine Außenbegrenzung mit einer kreisrunden oder vieleckigen Form aufweisen. Die Außenbegrenzung kann dabei insbesondere durch den Innenumfang der Rahmenstruktur gebildet sein. In diesem Fall kann der Innenumfang der Rahmenstruktur im Randbereich der Zellenstruktur ausgebildete Zellen begrenzen.

Gemäß einer weiteren Ausgestaltung kann die Zellenstruktur zumindest abschnittsweise durch eine gestuft ausgebildete Rahmenstruktur eingefasst sein. Die gestufte Ausbildung kann dabei insbesondere an einem Außenumfang der Rahmenstruktur vorgesehen sein. Weiter bevorzugt ist die Rahmenstruktur in einer Strömungsorientierung gestuft ausgebildet. Beispielsweise kann die Rahmenstruktur eine in oder entgegen einer Strömungsrichtung stufenweise abnehmende Außenumfangsgröße aufweisen. Hierzu kann zumindest eine entlang eines Rahmenaußenumfangs verlaufende Stufe vorgesehen sein. Durch eine derartige gestufte Ausbildung kann insbesondere der Halt eines Gießfilters innerhalb eines Anschnittsystems einer Gießform verbessert werden. Insbesondere gewährleistet eine solche gestufte Ausbildung die formschlüssige Abstützung der Rahmenstruktur innerhalb eines Anschnittsystems einer Gießform, so dass die sichere Positionierung auch während des Gießvorgangs aufrechterhalten werden kann.. Ebenso kann eine Rahmenstruktur zur Einfassung der Zellenstruktur an ihrem Außenumfang wenigstens einen Vorsprung oder eine Mehrzahl an Vorsprüngen aufweisen, über die eine Abstützung des Gießfilters in Strömungsorientierung erfolgen kann, insbesondere innerhalb eines Anschnittsystems einer Gießform.

In bevorzugter Weise kann die Zellenstruktur zumindest abschnittsweise durch eine Rahmenstruktur mit einer Mehrzahl an Stufen eingefasst sein. Durch das Vorsehen mehrerer Stufen kann die Stützfunktionalität in der Rahmenstruktur innerhalb eines Anschnittsystems einer Gießform weiter verbessert werden.

Gemäß einer weiteren Ausgestaltung des erfindungsgemäßen Gießfilters kann die Rahmenstruktur zumindest eine Rahmenwand mit einer maximalen Wandstärke von weniger als 2 mm, insbesondere weniger als 1,75 mm, und/oder mit einer minimalen Wandstärke von mehr als 1 mm, bevorzugt von mehr als 1,25 mm aufweisen. Eine solche Rahmenwand kann insbesondere eine Wandstärke von etwa 1,5 mm aufweisen. Durch eine solche Rahmenstruktur wird einerseits eine ausreichende Gesamtstabilität des Gießfilters begünstigt, ohne jedoch dass durch die Rahmenstruktur eine zu große Stirnfläche entsteht, welche den Strömungswiderstand unnötig vergrößert.

Es kann weiter von Vorteil sein, wenn die Rahmenstruktur und/oder die Rahmenwand einen Wandabschnitt aufweist, der gegenüber der Zellenstruktur, insbesondere aus einer Abschlussebene der Zellenstruktur, vorsteht und/oder in Strömungsorientierung gegenüber zumindest einer der Zellen und/oder Zellenwände vorsteht. Ein in Strömungsorientierung vorstehender Wandabschnitt kann insbesondere in oder entgegegn einer Strömungsrichtung vorstehen. Dabei kann die Rahmenstruktur beziehungsweise der jeweilige Wandabschnitt um mehr als 1 mm vorstehen, insbesondere um etwa 1,3 mm. Dies wirkt sich günstig auf die Gesamtstabilität des Gießfilters aus. So kann der vorstehende Wandabschnitt insbesondere verbunden sein mit vorstehenden Abschnitten der Stützstruktur beziehungsweise der jeweiligen Stützwand, so dass durch eine derartige Ausgestaltung der Rahmenstruktur auch die Stabilität der Stützstruktur und folglich der Zellenstruktur verbessert werden kann.

Gemäß einer weiter bevorzugten Ausgestaltung ist/sind die Zellenstruktur, die Stützstruktur und/oder die Rahmenstruktur zumindest abschnittsweise durch 3D-Druck, insbesondere 3D-Siebdruck, hergestellt. Durch 3D-Druck besteht eine große Flexibilität im Hinblick auf die geometrische Formgebung. Dies gilt insbesondere im Hinblick auf Formvariationen entlang der Längsachse des Gießfilters, wie beispielsweise die gestufte Ausgestaltung der Rahmenstruktur in Strömungsorientierung. Gleichzeitig gewährleistet die Herstellung durch 3D-Siebdruck ein hohes Maß an Reproduzierbarkeit. Zudem kann die Zellenstruktur, die Stützstruktur beziehungsweise die Rahmenstruktur durch 3D-Druck, insbesondere 3D-Siebdruck, auf kostengünstige Weise hergestellt werden. Besonders bevorzugt ist der gesamte Gießfilter durch 3D-Druck beziehungsweise 3D-Siebdruck hergestellt.

In bevorzugter Weise kann die Zellenstruktur, die Stützstruktur und/oder die Rahmenstruktur einstückig ausgebildet sein. Sämtliche Abschnitte des Gießfilters können somit ineinander übergehen beziehungsweise integral miteinander ausgebildet sein, wodurch die Gesamtstabilität weiter verbessert werden kann.

Gemäß einer weiteren Ausgestaltung des Gießfilters ist die Zellenstruktur, die Stützstruktur und/oder die Rahmenstruktur zumindest abschnittsweise aus einer Oxidkeramik, einer Nichtoxidkeramik und/oder einer Verbundkeramik hergestellt. Derartige Werkstoffe weisen ausreichende mechanische Eigenschaften bei gleichzeitig guter Filter- beziehungsweise Reinigungswirkung auf. Bevorzugt kann für die Zellenstruktur, die Stützstruktur und/oder die Rahmenstruktur auch ein keramischer Werkstoff auf Aluminiumbasis, insbesondere enthaltend Kaolinit, Mullit und/oder Cordierit verwendet werden. Durch den Einsatz eines keramischen Werkstoffs auf Aluminiumbasis wird besonders die Eignung des Gießfilters für Aluminiumguss verbessert, da die Gefahr des Einschlusses störender Fremdatome verringert wird. Keramische Werkstoffe auf Aluminiumbasis können insbesondere als Aluminiumoxid, Aluminiumnitrid oder Aluminiumtitanat ausgebildet sein.

Ein weiterer Aspekt der vorliegenden Erfindung betrifft eine Gießvorrichtung mit einer Gießform und einem voranstehend beschriebenen Gießfilter. Eine solche Gießvorrichtung eignet sich in besonders vorteilhafter Weise für das Gießen von Metallkomponenten, wie zum Beispiel von Aluminiumfelgen für Automobile.

Ein weiterer unabhängiger Aspekt der vorliegenden Erfindung betrifft die Verwendung eines Gießfilters, insbesondere eines voranstehend beschriebenen Gießfilters, zum Gießen von Metallkomponenten, insbesondere von Aluminiumkomponenten. In besonders vorteilhafter Weise kann ein solcher Gießfilter zum Gießen von Aluminiumfelgen für Automobile verwendet werden.

Ein noch weiterer Aspekt unabhängiger der vorliegenden Erfindung betrifft ein Verfahren zur Herstellung einer Metallkomponente, insbesondere einer Aluminiumfelge, bei dem eine Metallschmelze durch einen voranstehend beschriebenen Gießfilter durchgeleitet wird und anschließend innerhalb einer Gießform erstarrt. Ein solches Verfahren eignet sich insbesondere zum Gießen von Metallkomponenten, wie zum Beispiel von Aluminiumfelgen für Automobile.

Ein weiterer unabhängiger Aspekt der vorliegenden Erfindung betrifft ein Verfahren zur Herstellung eines Gießfilters, insbesondere eines vorstehend beschriebenen Gießfilters. Bei einem erfindungsgemäßen Verfahren zur Herstellung eines Gießfilters wird eine Zellenstruktur, eine Stützstruktur und/oder eine Rahmenstruktur schichtweise im 3D-Siebdruckverfahren erzeugt. Durch die schichtweise Erzeugung im 3D-Siebdruckverfahren kann mit nur verhältnismäßig geringem Kostenaufwand ein Gießfilter mit reproduzierbaren Eigenschaften hergestellt werden wobei das Siebdruckverfahren ein hohes Maß an Flexibilität hinsichtlich der geometrischen Gestaltung des Gießfilters zulässt, beispielsweise Form-, Höhen-und/oder Dickenvariationen der jeweiligen Wandabschnitte, die sich durch den schichtweisen Aufbau bewerkstelligen lassen. So kann beispielsweise durch den schichtweisen Aufbau einer Wand beziehungsweise eines Wandabschnitts eine Stufenstruktur eingebracht werden, was sich im Einsatz des Gießfilters, insbesondere hinsichtlich der Positionsstabilität innerhalb eines Anschnittsystems einer Gießform als vorteilhaft erweisen kann. Ebenso können unterschiedliche Wandabschnitte mit unterschiedlichen Höhen und/oder Dicken ausgestaltet werden, wodurch in besonders vorteilhafter Weise Stützstrukturen für die jeweilige Zellenstruktur hergestellt werden können.

Ein noch weiterer Aspekt der vorliegenden Erfindung betrifft eine Anlage zur Herstellung von dreidimensionalen Siebdrucken. Erfindungsgemäß ist eine solche Anlage zur Herstellung eines voranstehend beschriebenen Gießfilters eingerichtet und/oder mit geeigneten Schablonen zur schichtweisen Erzeugung eines voranstehend beschriebenen Gießfilters ausgestattet.

Nachfolgend wird die Erfindung beispielhaft unter Bezugnahme auf die beigefügten Figuren beschrieben. Es zeigen, jeweils schematisch:
- Fig. 1: eine perspektivische Darstellung eines erfindungsgemäßen Gießfilters gemäß einer Ausführungsform,
- Fig. 2: eine Draufsicht auf den Gießfilter von Fig. 1,
- Fig. 3: eine Detailansicht des Gießfilters gemäß Fig. 2,
- Fig. 4: eine Draufsicht auf einen erfindungsgemäßen Gießfilter gemäß einer Ausführungsform,
- Fig. 5: eine Seitenansicht eines erfindungsgemäßen Gießfilters gemäß einer Ausführungsform,
- Fig. 6: eine Seitenansicht eines Gießfilters gemäß einer weiteren Ausführungsform,
- Fig. 7: eine Seitenansicht eines erfindungsgemäßen Gießfilters gemäß einer noch weiteren Ausführungsform,
- Fig. 8: eine perspektivische Darstellung eines erfindungsgemäßen Gießfilters gemäß einer weiteren Ausführungsform.

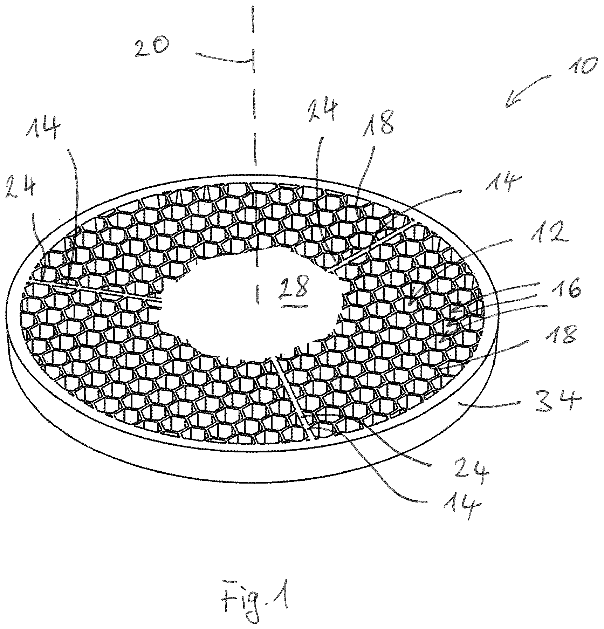

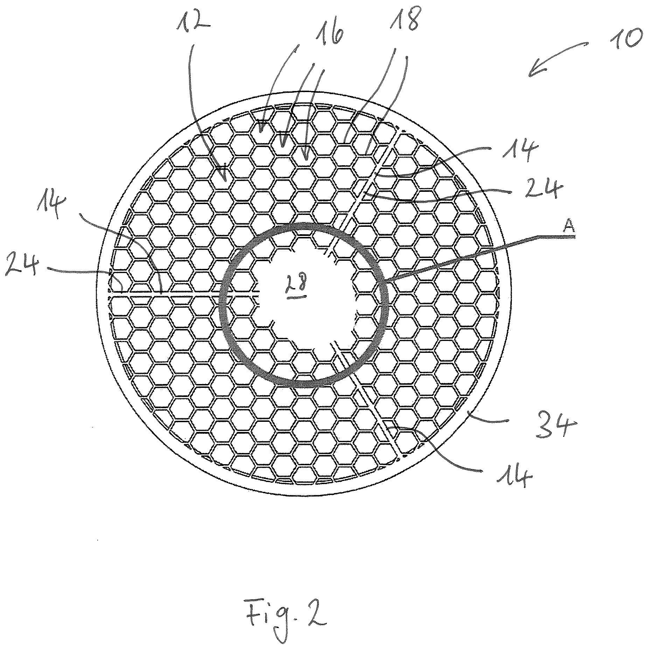

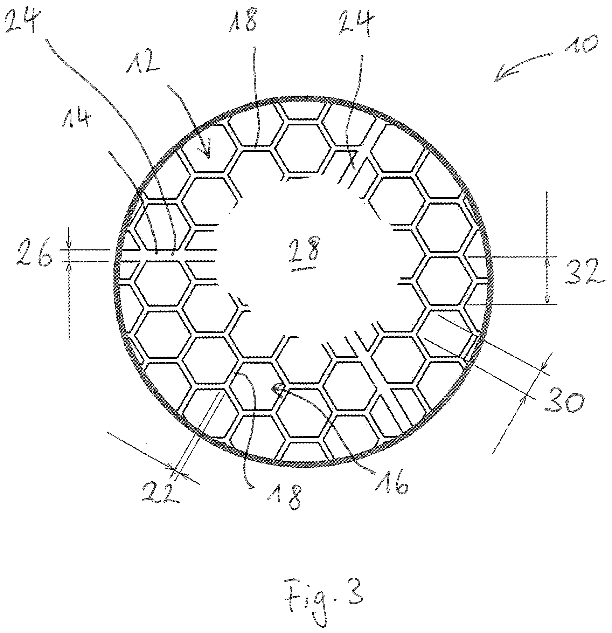

Die Fig. 1 bis 3 zeigen einen Gießfilter 10 gemäß einer ersten Ausführungsform der Erfindung. Dabei zeigt Fig. 1 eine perspektivische Darstellung von einer Einflussseite. Die in Fig. 1 zu sehende Oberseite kann also eine Einflussseite sein, von der eine Metallschmelze in den Gießfilter 10 strömt. Eine Draufsicht auf den Gießfilter 10 ist in Fig. 2 zu sehen und Fig. 3 zeigt eine Detailansicht des in Fig. 2 mit "A" gekennzeichneten Abschnitts.

Der Gießfilter 10 weist eine Zellenstruktur 12 durch Durchleitung einer Metallschmelze und eine Stützstruktur 14 zur Verstärkung der Zellstruktur 12 auf. Die Zellenstruktur 12 und auch die Stützstruktur 14 können zumindest abschnittsweise aus einem keramischen Werkstoff hergestellt sein, insbesondere vollständig aus einem keramischen Werkstoff. In bevorzugter Weise kann der gesamte Gießfilter 10 aus einem keramischen Werkstoff ausgebildet sein. Ferner kann der gesamte Gießfilter 10 einstückig ausgebildet sein, insbesondere aus einem einzigen Werkstoff bestehen.

Die Zellenstruktur 12 ist durch eine Mehrzahl von Zellen 16 gebildet, die durch Zellenwände 18 zueinander begrenzt sind. Die Zellen 16 bilden Strömungskanäle, durch die eine Metallschmelze entlang einer mit dem Bezugszeichen 20 gekennzeichneten Strömungsorientierung strömen kann. Die Strömungsorientierung 20 verläuft entlang einer Längsachse des Gießfilters 10.

Die Zellen 16 weisen jeweils eine hexagonale Querschnittsform auf, die entlang der Strömungsorientierung 20 unverändert bleibt. Die hexagonale Querschnittsform der Zellen 16 erstreckt sich insbesondere quer zu der Strömungsorientierung 20 und bleibt entlang der Strömungsorientierung 20 unverändert oder im Wesentlichen unverändert. Die jeweiligen Zellen 16 weisen somit eine Einfluss- und eine Ausflussöffnung mit identischer Querschnittsform auf.

Details der Zellenstruktur 12 sowie der Stützstruktur 14 sind der Fig. 3 zu entnehmen. Die Zellenwände 18 weisen eine Wandstärke 22 auf, die weniger als 1 mm betragen kann, insbesondere etwa 0,3 mm. Ferner kann die Stützstruktur 14 durch zumindest eine Stützwand 24 ausgebildet sein, die zumindest abschnittsweise zwischen benachbarten Zellen 16 verläuft und deren Wandstärke 26 zumindest abschnittsweise größer ist als die Wandstärke 22 einer Zellenwand 18. Die Wandstärke 26 einer Stützwand kann beispielsweise 0,625 mm betragen. In dem Ausführungsbeispiel gemäß den Fig. 1 bis 3 sind insgesamt drei Stützwände 24 vorgesehen, welche die Zellenstruktur 12 in drei etwa gleichgroße kuchenförmige Zellenstrukturabschnitte unterteilen.

Den Fig. 1 bis 3 kann ferner entnommen werden, dass eine Mehrzahl der Zellen 16 eine zueinander gleiche Formgebung aufweisen. Lediglich in einem Randbereich der Zellenstruktur 12 sind Randzellen ausgebildet, deren Formgebung von innen liegenden Zellen 16 abweicht.

In den Fig. 1 bis 3 ist ein Zentralbereich 28 ausgeblendet. In diesem Zentralbereich 28 können unterschiedliche geometrische Ausgestaltungen vorgesehen sein. So können die Stützwände 24 im Zentralbereich 28 ineinander übergehen und die Zellen 16 können bis in den Zentralbereich 28 hinein in wiederkehrender Anordnung ausgebildet sein. Ebenso ist es möglich, in dem Zentralbereich 28 eine Haltestruktur für einen Niederhalter vorzusehen, was hier nicht näher erläutert wird.

In der Fig. 3 sind weitere Bemaßungen der Zellenstruktur 12 gekennzeichnet. Insbesondere ist eine Länge einer Zellenwand 18 mit dem Bezugszeichen 30 versehen und der Abstand zwischen zwei gegenüberliegenden Zellen 18 einer Zelle 16 ist mit 32 gekennzeichnet. Die Länge 30 einer Zellenwand kann beispielsweise 1,5 mm betragen und der Abstand 32 zwischen zwei gegenüberliegenden Zellenwänden 18 kann beispielsweise 2,6 mm betragen. Die Höhe der Zellenstruktur 12 beziehungsweise der Zellenwände 18, welche sich in Strömungsorientierung 20 erstreckt, kann beispielsweise 4,2 mm betragen. Die Höhe der Stützwände 24 kann identisch ausgebildet sein zu der Höhe der Zellenwände 18. Ebenso ist es möglich, dass die Höhe der Stützwände 24 abweicht von der Höhe der Zellenwände 18.

In dem Ausführungsbeispiel gemäß den Fig. 1 bis 3 verlaufen die Stützwände 24 linear durch die Zellenstruktur 12 hindurch. Dabei begrenzen die Stützwände 24 zum Teil benachbarte Zellen 16 mit hexagonaler Querschnittsform. Ebenso bedingt der Verlauf der linearen Stützwände 24 gemäß den Fig. 1 bis 3, dass Zellen 16 mit einer hexagonalen Querschnittsform durch einen Wandabschnitt der Stützwand 24 aufgeteilt werden in zwei gleichgroße Zellen mit einer jeweils trapezartigen Querschnittsform.

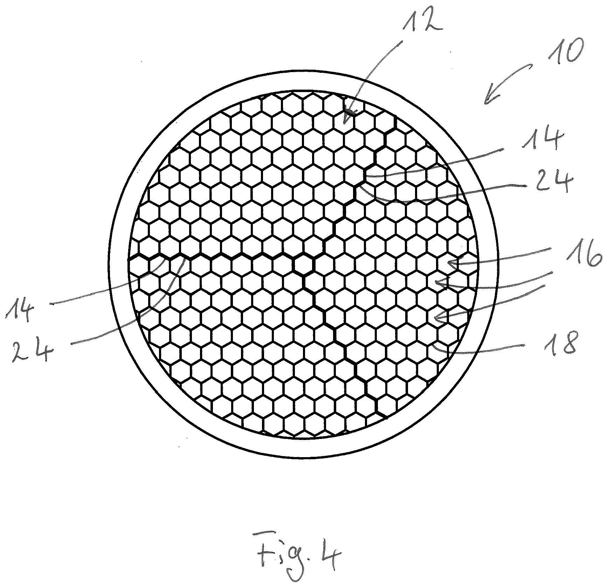

Die Fig. 4 zeigt eine Draufsicht auf einen Gießfilter 10 gemäß einer weiteren Ausführungsform der Erfindung. Die Ausführungsform gemäß der Fig. 4 unterscheidet sich von der Ausführungsform gemäß den Fig. 1 bis 3 lediglich in der Ausgestaltung der Stützstruktur 14. Auch bei dem Ausführungsbeispiel gemäß der Fig. 4 ist die Stützstruktur 14 durch insgesamt drei Stützwände 24 ausgebildet, wobei diese jedoch nicht linear durch die Zellenstruktur 12 verlaufen, sondern zueinander gewinkelt verlaufende Wandabschnitte aufweisen. Durch diese zueinander gewinkelt verlaufenden Wandabschnitte kann die jeweilige Stützwand 24 die hexagonale Querschnittsform der jeweils angrenzenden Zellen 16 abbilden beziehungsweise die jeweiligen Zellen 16 in entsprechender Weise begrenzen, ohne dass einzelne Zellen mit hexagonaler Querschnittsform durch die Stützwand 24 aufgeteilt sind in zwei Zellen mit trapezartiger Querschnittsform. Durch diese Ausführungsform gemäß Fig. 4 wird eine gleichmäßigere Zellenausgestaltung ermöglicht.

Den Fig. 1, 2 sowie 4 kann ferner entnommen werden, dass die Zellenstruktur 12 durch eine Rahmenstruktur 34 eingefasst ist. Die Rahmenstruktur 34 weist eine kreisrunde Außenumfangsform und eine kreisrunde Innenumfangsform auf, wobei auch andere Außenumfangs- und Innenumfangsgeometrien möglich sind, wie zum Beispiel vieleckige Innenumfangs- und Außenumfangsgeometrien.

Durch die Rahmenstruktur 34 wird ein Durchströmbereich für eine Metallschmelze begrenzt. Die Rahmenstruktur 34 kann dabei eine Rahmenwand mit einer maximalen Wandstärke von etwa 1,5 mm aufweisen. Dabei ist es möglich, dass die Rahmenstruktur 34 eine entlang der Strömungsorientierung 20 gleichbleibende Wandstärke oder auch eine sich verändernde Wandstärke aufweist, insbesondere durch die Ausbildung von Stufen 36.

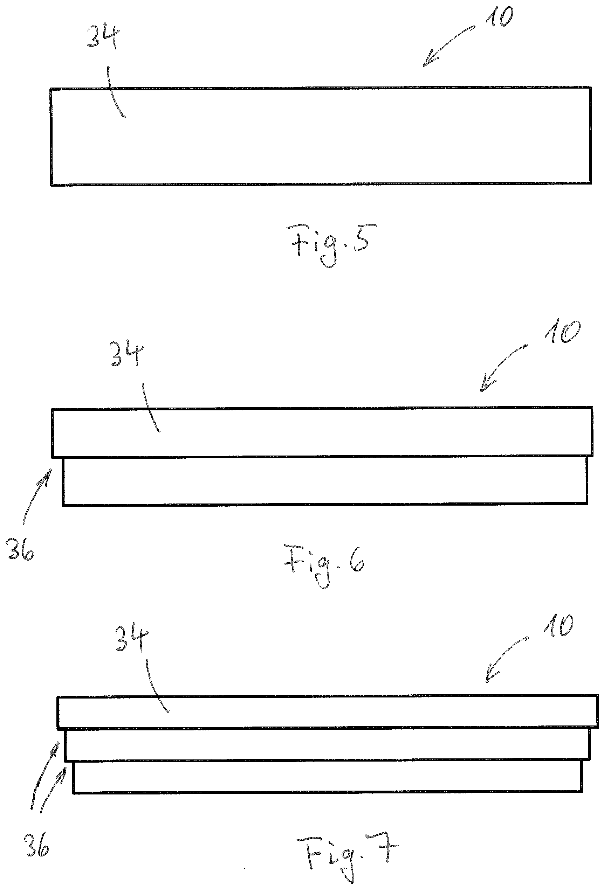

Unterschiedliche Ausführungsformen in Bezug auf die Form der Rahmenstruktur 34 beziehungsweise der Rahmenwand der Rahmenstruktur 34 sind in den Seitenansichten gemäß Fig. 5 bis 7 dargestellt. Die Fig. 5 zeigt dabei eine Seitenansicht eines erfindungsgemäßen Gießfilters 10 mit einer Rahmenstruktur 34, die an ihrem Außenumfang frei von Stufen ausgebildet ist. Gemäß Fig. 6 ist eine Rahmenstruktur 34 vorgesehen, die in einer Strömungsorientierung 20 gestuft ausgebildet ist beziehungsweise eine in Strömungsrichtung 40 stufenweise abnehmende Außenumfangsgröße aufweist. Hierzu ist eine entlang eines Rahmenaußenumfangs verlaufende Stufe 36 vorgesehen. Durch eine solche Stufe 36 kann der Gießfilter 10 in besonders vorteilhafterweise innerhalb eines Anschnittsystems einer Gießform formschlüssig abgestützt werden, sodass eine insgesamt höhere Betriebssicherheit erreicht werden kann. Gemäß Fig. 7 ist eine Mehrzahl an Stufen 36 vorgesehen, wodurch sich die Abstützsicherheit weiter verbessern lässt.

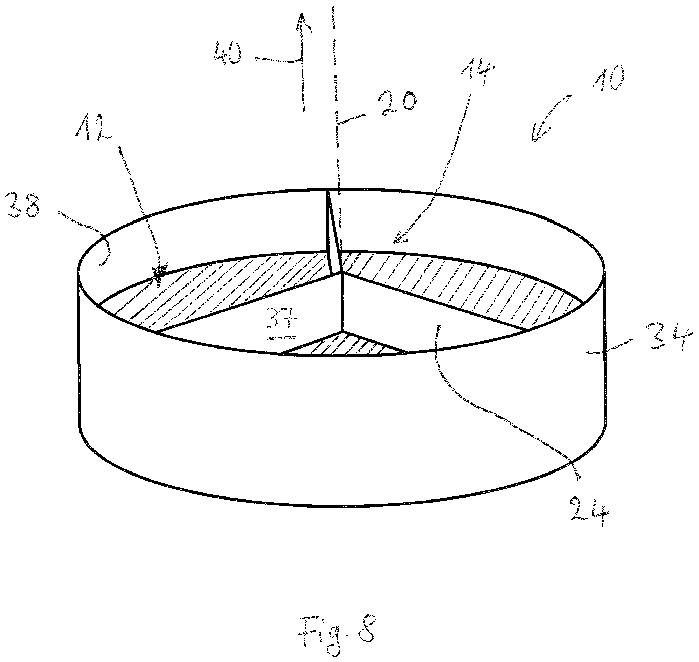

Die Fig. 8 zeigt eine weitere Ausführungsform eines Gießfilters 10. Dabei handelt es sich bei der in Fig. 8 gezeigten Oberseite um eine Ausströmseite des Gießfilters 10. Schraffiert dargestellt ist in Fig. 8 die Zellstruktur 12 beziehungsweise eine Abschlussebene der Zellenstruktur 12. Ferner sind die Stützwände 24 der Rahmenstruktur 14 in schematischer Weise dargestellt. Auch wenn dies in der Fig. 8 nicht näher dargestellt ist, kann auch hier die Zellenstruktur 12 aus einer Mehrzahl von Zellen 16 bestehen, die jeweils eine hexagonale Querschnittsform aufweisen.

Der Fig. 8 kann ferner entnommen werden, dass die Stützwände 24 der Stützstruktur 14 aus der Abschlussebene der Zellenstruktur 12 vorstehen. Die Stützwände 24 weisen demnach einen Wandabschnitt 37 auf, der gegenüber der Zellenstruktur 12, insbesondere der in Fig. 8 schraffiert dargestellten Zellenebene, vorsteht. Der vorstehende Wandabschnitt 37 kann insbesondere eine Höhe von etwa 1,3 mm aufweisen.

Die vorstehende Ausgestaltung der Stützwände 24 kann auch bei der Rahmenstruktur 34 vorgesehen sein. So kann der Fig. 8 ebenfalls entnommen werden, dass die Rahmenstruktur 34 einen Rahmenwandabschnitt 38 aufweist, der aus der in Fig. 8 schraffiert dargestellten Abschlussebene der Zellenstruktur 12 in Strömungsrichtung vorsteht. Die Höhe des vorstehenden Wandabschnitts der Rahmenstruktur 34 kann ebenfalls etwa 1,3 mm betragen. Die Strömungsrichtung ist in Fig. 8 mit dem durch Bezugszeichen 40 gekennzeichneten Pfeil dargestellt.

Mit einer Ausgestaltung gemäß Fig. 8 kann einerseits eine ausreichende mechanische Stabilität des Gießfilters 10 gewährleistet werden, ohne dass die Zellenstruktur 12 eine übermäßige Höhe in Strömungsorientierung 20 aufweisen muss, welche sich negativ auf den Strömungswiderstand auswirken würde. Ein derartiger Gießfilter 10 weist somit günstige Filter- beziehungsweise Reinigungseigenschaften bei gleichzeitig hoher Betriebssicherheit auf.

Ein erfindungsgemäßer Gießfilter 10 gemäß den Ausführungsbeispielen in Fig. 1 bis 8 kann in besonders bevorzugter Weise durch 3D-Siebdruck hergestellt sein. Hierdurch lassen sich Variationen entlang der Längsachse beziehungsweise entlang der Strömungsorientierung 20 in besonders vorteilhafter Weise realisieren, ohne dass hierbei ein übermäßiger Kostenaufwand entsteht. In geeigneter Weise kann ein Gießfilter 10 aus einer Oxidkeramik hergestellt werden, insbesondere aus einem keramischen Werkstoff auf Aluminiumbasis. Ein solcher keramischer Werkstoff kann beispielsweise als Aluminiumoxid, Aluminiumnitrid oder Aluminiumtitanat ausgebildet sein. Durch einen keramischen Werkstoff auf Aluminiumbasis kann beim Gießen einer Aluminiumschmelze, beispielsweise zwecks Herstellung von Automobilfelgen, ein unerwünschter Einfluss von Fremdatomen vermieden werden. Die Gießqualität kann auf diese Weise verbessert werden.

Die voranstehend beschriebenen Ausführungsformen und die in der Beschreibungseinleitung beschriebenen allgemeinen Konzepte lassen sich beliebig miteinander kombinieren beziehungsweise variieren. Beispielsweise kann ein Gießfilter gemäß Fig. 8 auch mit Stufen 36 gemäß den Ausführungsformen in Fig. 6 oder 7 ausgebildet sein, obwohl dies nicht näher dargestellt ist. Ebenso kann ein Gießfilter 10 gemäß der Ausführungsform in Fig. 1 bis 3 oder gemäß der Ausführungsform in Fig. 4 mit vorstehenden Wandabschnitten gemäß Fig. 8 ausgebildet sein, obwohl dies nicht näher dargestellt ist. Schließlich kann ein Gießfilter gemäß Fig. 8 eine Zellenstruktur 12 mit Zellen 16 aufweisen, die jeweils mit einer hexagonalen Querschnittsform ausgebildet sind.

Ein erfindungsgemäßer Gießfilter 10 eignet sich in besonders vorteilhafter Weise für das Gießen einer Aluminiumschmelze oder auch für das Gießen anderer Metallschmelzen, beispielsweise einer Schmelze aus Stahl. Insbesondere eignet sich ein Gießfilter 10 für das Gießen von Aluminiumfelgen oder anderen Aluminiumkomponenten für die Anwendung in der Automobilindustrie.

Bei dem voranstehend beschriebenen Verfahren zur Herstellung eines Gießfilters beziehungsweise dem mit einer Vorrichtung zur Herstellung eines Gießfilters durchführbaren Verfahren handelt es sich um das Exentis 3D Mass Customization® Verfahren.

### Bezugszeichenliste

- 10: Gießfilter
- 12: Zellenstruktur
- 14: Stützstruktur
- 16: Zellen
- 18: Zellenwand
- 20: Strömungsorientierung
- 22: Wandstärke einer Zellenwand
- 24: Stützwand
- 26: Wandstärke einer Stützwand
- 28: Zentralabschnitt
- 30: Länge einer Zellenwand
- 32: Abstand zwischen gegenüberliegenden Zellenwänden
- 34: Rahmenstruktur
- 36: Stufe
- 37: Vorstehender Wandabschnitt
- 38: Vorstehender Wandabschnitt
- 40: Strömungsrichtung

## Patentansprüche

1. Gießfilter (10), insbesondere für das Filtrieren und/oder Reinigen einer Metallschmelze, mit einer zumindest abschnittsweise aus einem keramischen Werkstoff hergestellten Zellenstruktur (12) zur Durchleitung einer Metallschmelze, wobei die Zellenstruktur (12) durch eine Mehrzahl von Zellen (16) gebildet ist, die durch Zellenwände (18) zueinander begrenzt sind, wobei zumindest eine der Zellenwände (18) eine Wandstärke von weniger als 1 mm aufweist und wobei zumindest eine der Zellen (16) eine hexagonale Querschnittsform aufweist.

2. Gießfilter (10) nach Anspruch 1,
**dadurch gekennzeichnet, dass**
zumindest eine der Zellen (16) eine quer zu einer Strömungsorientierung (20) verlaufende hexagonale Querschnittsform aufweist und/oder dass zumindest eine der Zellen (16) einen entlang einer Strömungsorientierung (20) gleichbleibenden Querschnitt aufweist.

3. Gießfilter (10) nach Anspruch 1 oder 2,
**dadurch gekennzeichnet, dass**
zwei oder mehr Zellen (16), bevorzugt mehr als 50 % Prozent der Zellen (16), insbesondere mehr als 75% der Zellen (16), eine gleiche Formgebung aufweisen und/oder dass die Zellenstruktur (12) durch Randzellen begrenzt ist und die Formgebung zumindest einer der Randzellen von der Formgebung einer innenliegenden Zelle (16) abweicht.

4. Gießfilter (10) nach zumindest einem der vorstehenden Ansprüche,
**dadurch gekennzeichnet, dass**
zumindest eine der Zellenwände (18) eine Wandstärke von weniger als 0,75 mm, bevorzugt weniger als 0,5 mm, weiter bevorzugt von weniger als 0,4 mm, noch weiter bevorzugt von weniger als 0,35 mm und/oder mehr als 0,2 mm, bevorzugt mehr als 0,25 mm, insbesondere etwa 0,3 mm aufweist.

5. Gießfilter (10) nach zumindest einem der vorstehenden Ansprüche,
**dadurch gekennzeichnet, dass**
die Zellenstruktur (12) und/oder zumindest eine der Zellen (16) und/oder Zellenwände (18) eine sich in Strömungsorientierung (20) erstreckende Höhe von weniger als 6 mm, insbesondere von weniger als 5 mm, und/oder von mehr als 3 mm, bevorzugt von mehr als 4 mm, insbesondere von etwa 4,2 mm aufweist.

6. Gießfilter (10) nach zumindest einem der vorstehenden Ansprüche,
**dadurch gekennzeichnet, dass**
die Zellenstruktur (12) mit einer Stützstruktur (14) zur Verstärkung der Zellenstruktur (12) verbunden und/oder einstückig mit dieser ausgebildet ist, wobei die Stützstruktur (14) bevorzugt durch zumindest eine Stützwand (18) gebildet ist, die zumindest abschnittsweise zwischen benachbarten Zellen (16) verläuft und/oder deren Wandstärke (26) zumindest abschnittsweise größer ist als die Wandstärke (22) einer Zellenwand (18) und/oder deren Wandhöhe zumindest abschnittsweise größer ist als die Wandhöhe einer Zellenwand (18).

7. Gießfilter (10) nach Anspruch 6,
**dadurch gekennzeichnet, dass**
die Stützwand (24) einen Wandabschnitt aufweist, der gegenüber der Zellenstruktur (12), insbesondere aus einer Abschlussebene der Zellenstruktur (12), vorsteht und/oder in Strömungsorientierung (20), insbesondere in oder entgegen einer Strömungsrichtung (40), gegenüber zumindest einer der Zellen (16) und/oder Zellenwände (18) vorsteht und/oder um mehr als 1 mm vorsteht, insbesondere um etwa 1,3 mm.

8. Gießfilter (10) nach einem der Ansprüche 6 oder 7,
**dadurch gekennzeichnet, dass**
die Stützwand (24) eine Wandstärke (26) von weniger als 0,8 mm, bevorzugt von weniger als 0,7 mm und/oder mehr als 0,5 mm, bevorzugt mehr als 0,6 mm, insbesondere etwa 0,625 mm aufweist.

9. Gießfilter (10) nach zumindest einem der vorstehenden Ansprüche,
**dadurch gekennzeichnet, dass**
die Zellenstruktur (12) zumindest abschnittsweise durch eine gestuft ausgebildete Rahmenstruktur (34) eingefasst ist, die bevorzugt in einer Strömungsorientierung (20) gestuft ausgebildet ist und/oder die eine in oder entgegen einer Strömungsrichtung (40) stufenweise abnehmende Außenumfangsgröße aufweist und/oder die zumindest eine entlang eines Rahmenaußenumfangs verlaufende Stufe (36) aufweist, und/oder dass die Zellenstruktur (12) zumindest abschnittsweise durch eine Rahmenstruktur (34) mit einer Mehrzahl an Stufen (36) eingefasst ist.

10. Gießfilter (10) nach Anspruch 9,
**dadurch gekennzeichnet, dass**
die Rahmenstruktur (34) zumindest eine Rahmenwand mit einer maximalen Wandstärke von weniger als 2 mm, insbesondere weniger als 1,75 mm, insbesondere von etwa 1,5 mm, und/oder mit einer minimalen Wandstärke von mehr als 1 mm, bevorzugt von mehr als 1,25 mm, insbesondere etwa 1,5 mm.

11. Gießfilter (10) nach einem der Ansprüche 9 oder 10,
**dadurch gekennzeichnet, dass**
die Rahmenstruktur (34) und/oder die Rahmenwand einen Wandabschnitt (38) aufweist, der gegenüber der Zellenstruktur (12), insbesondere aus einer Abschlussebene der Zellenstruktur (12), vorsteht und/oder in Strömungsorientierung (20), insbesondere in oder entgegen einer Strömungsrichtung (40), gegenüber zumindest einer der Zellen (16) und/oder Zellenwände (18) vorsteht und/oder um mehr als 1 mm vorsteht, insbesondere um etwa 1,3 mm.

12. Gießfilter (10) nach zumindest einem der vorstehenden Ansprüche,
**dadurch gekennzeichnet, dass**
die Zellenstruktur (12), die Stützstruktur (14) und/oder die Rahmenstruktur (34) zumindest abschnittsweise durch 3-D Druck, insbesondere 3-D Siebdruck, hergestellt ist/sind und/oder dass die Zellenstruktur (12), die Stützstruktur (14) und/oder die Rahmenstruktur (34) einstückig ausgebildet sind.

13. Gießfilter (10) nach zumindest einem der vorstehenden Ansprüche,
**dadurch gekennzeichnet, dass**
die Zellenstruktur (12), die Stützstruktur (14) und/oder die Rahmenstruktur (34) zumindest abschnittsweise aus einer Oxidkeramik, einer Nichtoxidkeramik und/oder Verbundkeramik hergestellt ist und/oder aus einem keramischen Werkstoff auf Aluminiumbasis, insbesondere enthaltend Kaolinit, Mullit und/oder Kordierit, und/oder aus einem Aluminiumoxid, Aluminiumnitrid oder Aluminiumtitanat.

14. Verwendung eines Gießfilters (10) nach einem der vorstehenden Ansprüche zum Gießen von Metallkomponenten, insbesondere von Aluminiumfelgen.

15. Verfahren zur Herstellung einer Metallkomponente, insbesondere einer Aluminiumfelge, bei dem eine Metallschmelze durch einen Gießfilter (10) nach einem der vorstehenden Ansprüche 1 bis 13 durchgeleitet wird und anschließend innerhalb einer Gießform erstarrt.

16. Verfahren zur Herstellung eines Gießfilters (10) nach einem der vorstehenden Ansprüche 1 bis 13, bei dem die Filterstruktur (11), die Zellenstruktur (12), die Stützstruktur (14) und/oder die Rahmenstruktur (34) schichtweise im 3-D Siebdruckverfahren erzeugt wird/werden.
